# EUROPÄISCHE PATENTSCHRIFT

(11) **EP 2 041 458 B1**
(45) Veröffentlichungstag und Bekanntmachung des Hinweises auf die Patenterteilung: **31.08.2016**
(21) Anmeldenummer: 07724226.1
(22) Anmeldetag: 13.04.2007
(51) Int. Cl.: F16J 15/08

(54) **FLACHDICHTUNG**
FLAT SEAL
JOINT PLAT

(30) Priorität: 15.07.2006 DE 102006032895
(43) Veröffentlichungstag der Anmeldung: 01.04.2009
(60) Teilanmeldung: 16180546.0
(73) Patentinhaber: ElringKlinger AG, 72581 Dettingen (DE)
(72) Erfinder: FRITZ, Wolfgang, 72555 Metzingen (DE)
(74) Vertreter: Hoeger, Stellrecht & Partner Patentanwälte mbB
(86) Internationale Anmeldenummer: PCT/EP2007/003287
(87) Internationale Veröffentlichungsnummer: WO 2008/009318

(56) Entgegenhaltungen:
- EP-A- 0 574 770
- EP-A- 1 643 170
- EP-A1- 0 440 831
- EP-A1- 0 511 445
- EP-A1- 0 950 807
- WO-A-2006/061042
- JP-A- 2000 329 232
- US-A- 5 213 345

## Beschreibung

Die vorliegende Erfindung betrifft eine Flachdichtung, insbesondere eine Zylinderkopfdichtung, umfassend
mindestens eine Dichtungsplatte, die mindestens eine Durchgangsöffnung und mindestens eine Abdichtsicke, welche sich um die Durchgangsöffnung herum erstreckt und auf der der Durchgangsöffnung zugewandten Seite durch einen inneren Sickenfuß und auf der der Durchgangsöffnung abgewandten Seite durch einen äußeren Sickenfuß begrenzt ist und eine zwischen dem inneren Sickenfuß und dem äußeren Sickenfuß verlaufende Sickenkuppe aufweist, umfasst, und
mindestens eine die Verformung der Abdichtsicke begrenzende Verformungsbegrenzungseinrichtung, die mindestens ein auf einer Stopperauflagefläche der Dichtungsplatte angeordnetes Stopperelement umfasst.

Dabei bewirkt die Abdichtsicke beim Verbau der Dichtung, dass sich die Kraft der Schrauben, mit denen die abzudichtenden Bauteile und die Dichtung gegeneinander verspannt werden, in eine Linienpressung längs der Sickenkuppe konzentriert.

Die (auch "Stopper" genannte) Verformungsbegrenzungseinrichtung schützt die höhenverformbare Abdichtsicke gegen eine unzulässig starke Verformung. Eine solche Verformungsbegrenzungseinrichtung stellt zugleich eine partielle Verdickung der Flachdichtung dar, durch welche die an die Flachdichtung angrenzenden Bauteile so vorgespannt werden, dass die dynamische Dichtspaltschwingung reduziert wird.

Eine solche Verformungsbegrenzungseinrichtung kann beispielsweise dadurch hergestellt werden, dass ein ringförmiges Stopperelement auf die Dichtungsplatte aufgeschweißt wird oder dass ein ringförmiger Randbereich der Dichtungsplatte, welcher die Durchgangsöffnung umgibt, umgebogen und als Stopperelement auf die Stopperauflagefläche der Dichtungsplatte zurückgefaltet wird.

Die effektive Stopperhöhe entspricht hierbei jeweils der Dicke des Stopperelements.

Die WO 2006/061042 A offenbart eine Flachdichtung gemäß dem Oberbegriff von Anspruch 1.

Der vorliegenden Erfindung liegt die Aufgabe zugrunde, eine Flachdichtung der eingangs genannten Art zu schaffen, bei welcher die effektive Stopperhöhe des Stopperelements in einfacher Weise auf einen Wert eingestellt werden kann, der von der Dicke des Stopperelements verschieden ist.

Diese Aufgabe wird durch eine Flachdichtung nach Anspruch 1 gelöst.

Der erfindungsgemäßen Lösung liegt somit das Konzept zugrunde, die effektive Stopperhöhe nicht durch eine Veränderung der Dicke des Stopperelements, sondern durch eine Veränderung des Höhenniveaus der Stopperauflagefläche zu verändern.

Dabei kann die effektive Stopperhöhe grundsätzlich gegenüber der Dicke des Stopperelements erhöht oder verringert werden.

Vorzugsweise ist vorgesehen, dass die effektive Stopperhöhe durch den Versatz der Stopperauflagefläche gegenüber der Dicke des Stopperelements verringert wird.

Bei einer bevorzugten Ausgestaltung der Erfindung ist vorgesehen, dass der Versatz mindestens ungefähr 10 %, vorzugsweise ungefähr mindestens 20 %, der Dicke des Stopperelements beträgt.

Ferner ist es günstig, wenn der Versatz mindestens ungefähr 20 µm, vorzugsweise ungefähr 40 µm, beträgt.

Ferner beträgt der Versatz bei bevorzugten Ausführungsformen der Erfindung weniger als die Dicke des Stopperelements.

Insbesondere ist es günstig, wenn der Versatz weniger als 0,3 mm beträgt.

Das Stopperelement kann auf derjenigen Seite der Dichtungsplatte angeordnet sein, zu welcher sich die Sickenkuppe der Abdichtsicke vorwölbt.

Alternativ hierzu kann auch vorgesehen sein, dass das Stopperelement auf derjenigen Seite der Dichtungsplatte angeordnet ist, welche der Seite entgegengesetzt ist, zu welcher sich die Sickenkuppe der Abdichtsicke vorwölbt.

Die erfindungsgemäße Flachdichtung ist mehrlagig ausgebildet.

Insbesondere kann vorgesehen sein, dass die Flachdichtung neben der Dichtungsplatte, die mit der Abdichtsicke und dem Stopperelement versehen ist, noch mindestens eine weitere Dichtungsplatte umfasst, welche mit mindestens einer sich um die Durchgangsöffnung herum erstreckenden Abdichtsicke versehen ist.

In diesem Fall kann insbesondere vorgesehen sein, dass das Stopperelement direkt oder indirekt, durch die Abstützung anderer Dichtungsplattenteile, als Verformungsbegrenzer für mehrere Abdichtsicken wirkt.

Bei einer bevorzugten Ausgestaltung der Erfindung ist vorgesehen, dass die Flachdichtung neben der Dichtungsplatte, die mit der Abdichtsicke und dem Stopperelement versehen ist, noch mindestens zwei weitere Dichtungsplatten umfasst, zwischen denen die Dichtungsplatte, die mit der Abdichtsicke und dem Stopperelement versehen ist, angeordnet ist.

Die erfindungsgemäße Flachdichtung umfasst neben der Dichtungsplatte, die mit der Abdichtsicke und dem Stopperelement versehen ist, noch mindestens eine Trägerplatte mit einer Abkröpfung.

Die Höhe dieser Abkröpfung der Trägerplatte kann im Wesentlichen dem Versatz der Stopperauflagefläche entsprechen.

Der über den nicht abgekröpften Bereich der Trägerplatte überstehende abgekröpfte Bereich der Trägerplatte, der vorzugsweise durch das Stopperelement oder einen die Stopperauflagefläche bildenden Teil der mit dem Stopperelement versehenen Dichtungsplatte abgestützt ist, dient als Verformungsbegrenzungseinrichtung für eine Abdichtsicke an einer anderen Dichtungsplatte der Flachdichtung.

Um die effektive Stopperhöhe einer solchen Verformungsbegrenzungseinrichtung gegenüber der Höhe des Versatzes der Stopperauflagefläche vermindern zu können, kann vorgesehen sein, dass der abgekröpfte Bereich der Trägerplatte, der sich um die Durchgangsöffnung herum erstreckt, eine geringere Dicke aufweist als der außerhalb des abgekröpften Bereichs liegende Bereich der Trägerplatte.

Eine solche Dickenreduzierung des abgekröpften Bereichs der Trägerplatte kann beispielsweise durch einen Prägevorgang erzielt werden.

Bei einer bevorzugten Ausgestaltung der Erfindung ist vorgesehen, dass die mit der Abkröpfung versehene Trägerplatte der Dichtungsplatte, die mit der Abdichtsicke und dem Stopperelement versehen ist, unmittelbar benachbart ist.

In diesem Fall ist es möglich, dass sich auf unterschiedlichen Höhenniveaus befindliche Bereiche der mit dem Stopperelement versehenen Dichtungsplatte entweder an dem nicht abgekröpften Bereich der Trägerplatte oder an dem abgekröpften Bereich der Trägerplatte, also auf unterschiedlichen Höhenniveaus an der Trägerplatte, abstützen.

Der abgekröpfte Bereich der Trägerplatte kann insbesondere zu der der Dichtungsplatte, die mit der Abdichtsicke und dem Stopperelement versehen ist, abgewandten Seite hin abgekröpft sein.

Ferner umfasst die Flachdichtung mindestens eine weitere Dichtungsplatte, die mit mindestens einer sich um die Durchgangsöffnung herum erstreckenden Abdichtsicke versehen ist und auf derjenigen Seite der Trägerplatte angeordnet ist, welche der Dichtungsplatte, die mit der Abdichtsicke und dem Stopperelement versehen ist, abgewandt ist. Der abgekröpfte Bereich der Trägerplatte dient als Verformungsbegrenzer für die Abdichtsicke dieser weiteren Dichtungsplatte.

Der Versatz zwischen dem Stopperelement und dem an den äußeren Sickenfuß der Abdichtsicke angrenzenden Teil der Oberfläche der Dichtungsplatte kann beispielsweise dadurch erzeugt sein, dass die Dichtungsplatte, die mit der Abdichtsicke und dem Stopperelement versehen ist, eine zwischen dem inneren Sickenfuß der Abdichtsicke und dem Stopperelement verlaufende Abkröpfung aufweist.

Dabei kann insbesondere vorgesehen sein, dass der abgekröpfte Bereich der Dichtungsplatte zu derjenigen Seite der Dichtungsplatte hin abgekröpft ist, zu welcher sich die Sickenkuppe der Abdichtsicke vorwölbt.

Alternativ hierzu kann auch vorgesehen sein, dass der abgekröpfte Bereich der Dichtungsplatte zu derjenigen Seite der Dichtungsplatte hin abgekröpft ist, die der Seite abgewandt ist, zu welcher sich die Sickenkuppe der Abdichtsicke vorwölbt.

Zusätzlich oder alternativ zur Erzeugung eines Versatzes zwischen der Stopperauflagefläche und dem an den äußeren Sickenfuß angrenzenden Teil der Oberfläche der Dichtungsplatte durch eine Abkröpfung der Dichtungsplatte ist vorgesehen, dass die Abdichtsicke unsymmetrisch bezüglich einer durch ihre Sickenkuppe und senkrecht zur Stopperauflagefläche verlaufenden Ebene ausgebildet ist, wobei der innere Sickenfuß auf einem anderen Höhenniveau verläuft als der äußere Sickenfuß.

Dabei kann der äußere Sickenfuß gegenüber dem inneren Sickenfuß zu derjenigen Seite der Dichtungsplatte hin versetzt sein, zu welcher sich die Sickenkuppe der Abdichtsicke vorwölbt.

Alternativ hierzu kann auch vorgesehen sein, dass der äußere Sickenfuß gegenüber dem inneren Sickenfuß zu derjenigen Seite der Dichtungsplatte hin versetzt ist, die der Seite der Dichtungsplatte abgewandt ist, zu welcher sich die Sickenkuppe der Abdichtsicke vorwölbt.

Bei einer symmetrisch ausgebildeten Vollsicke weist der innere Sickenfuß einen radialen Abstand bᵢ von der Sickenkuppe auf, welcher gleich groß ist wie der radial Abstand bₐ des äußeren Sickenfußes von der Sickenkuppe.

Wenn die Abdichtsicke derart unsymmetrisch bezüglich der durch ihre Sickenkuppe und senkrecht zur Stopperauflagefläche verlaufenden Ebene ausgebildet ist, dass der innere Sickenfuß auf einem anderen Höhenniveau verläuft als der äußere Sickenfuß, kann der radiale Abstand bᵢ des inneren Sickenfußes von der Sickenkuppe dennoch im wesentlichen gleich groß sein wie der radiale Abstand bₐ des äußeren Sickenfußes von der Sickenkuppe.

Um in diesem Fall eine mit einer symmetrisch ausgebildeten Vollsicke vergleichbare Kraft-Verformungs-Kennlinie der Abdichtsicke zu erzielen, kann jedoch auch vorgesehen sein, dass der radiale Abstand bᵢ des inneren Sickenfußes von der Sickenkuppe von dem radialen Abstand bₐ des äußeren Sickenfußes von der Sickenkuppe verschieden ist.

Insbesondere kann vorgesehen sein, dass der radiale Abstand von der Sickenkuppe bei demjenigen Sickenfuß, welcher eine größere Höhendifferenz zur Sickenkuppe aufweist, größer ist als bei demjenigen Sickenfuß, der eine kleinere Höhendifferenz zur Sickenkuppe aufweist.

Das Stopperelement kann grundsätzlich in beliebiger Weise an der Dichtungsplatte ausgebildet sein.

Das Stopperelement kann beispielsweise als ein separat von der Dichtungsplatte hergestelltes und anschließend, beispielsweise durch Verschweißung, Verlötung oder Verklebung, an der Stopperauflagefläche der Dichtungsplatte festgelegtes Element ausgebildet sein.

Ferner kann das Stopperelement als eine auf der Stopperauflagefläche erzeugte Beschichtung ausgebildet sein.

Alternativ hierzu kann auch vorgesehen sein, dass das Stopperelement als ein umgebogener Bereich der Dichtungsplatte, die mit der Abdichtsicke und dem Stopperelement versehen ist, ausgebildet ist.

In diesem Fall ist das Stopperelement also einstückig mit der Dichtungsplatte, an deren Stopperauflagefläche das Stopperelement angeordnet ist, ausgebildet.

Um auch dann, wenn das für die Dichtungsplatte verwendete metallische Material eine geringe Bruchdehnung aufweist, durch Umlegen eines Randbereichs der Dichtungsplatte beliebig breite Stopperelemente erzeugen zu können, ist es von Vorteil, wenn das Stopperelement mehrere Einschnitte aufweist, die sich von einem der Durchgangsöffnung abgewandten Rand des Stopperelements aus in Richtung auf die Durchgangsöffnung erstrecken.

Diese Einschnitte weiten sich beim Umlegen des Randbereichs der Dichtungsplatte an dem der Durchgangsöffnung abgewandten Rand des Stopperelements aus, so dass keine oder nur noch geringe Umfangsspannungen entstehen und dadurch beliebig breite Stopperelemente hergestellt werden können.

Bei einer bevorzugten Ausgestaltung der Flachdichtung ist dabei vorgesehen, dass die mittlere Länge der einschnittfreien Bereiche des Randes des Stopperelements zwischen den in der Längsrichtung des Stopperelements aufeinanderfolgenden Einschnitten größer ist als die mittlere Erstreckung der Einschnitte in der Längsrichtung des Stopperelements am Rand des Stopperelements.

Das Stopperelement kann durch Erzeugen der Einschnitte in einem Randbereich einer Durchgangsöffnung der Dichtungsplatte und anschließendes Umlegen des Randbereiches gebildet sein.

Die Einschnitte können beispielsweise durch mechanisches Schneiden, durch Stanzen oder durch Laserschneiden erzeugt sein.

Bei einer bevorzugten Ausgestaltung der Erfindung ist vorgesehen, dass die Einschnitte durch im wesentlichen materialverlustfreies Einschneiden in die Dichtungsplatte erzeugt sind. Hierbei verlaufen die seitlichen Ränder der Einschnitte vor dem Umlegen im wesentlichen parallel zueinander.

Weitere Merkmale und Vorteile der Erfindung sind Gegenstand der nachfolgenden Beschreibung und der zeichnerischen Darstellung von Ausführungsbeispielen.

In den Zeichnungen zeigen:

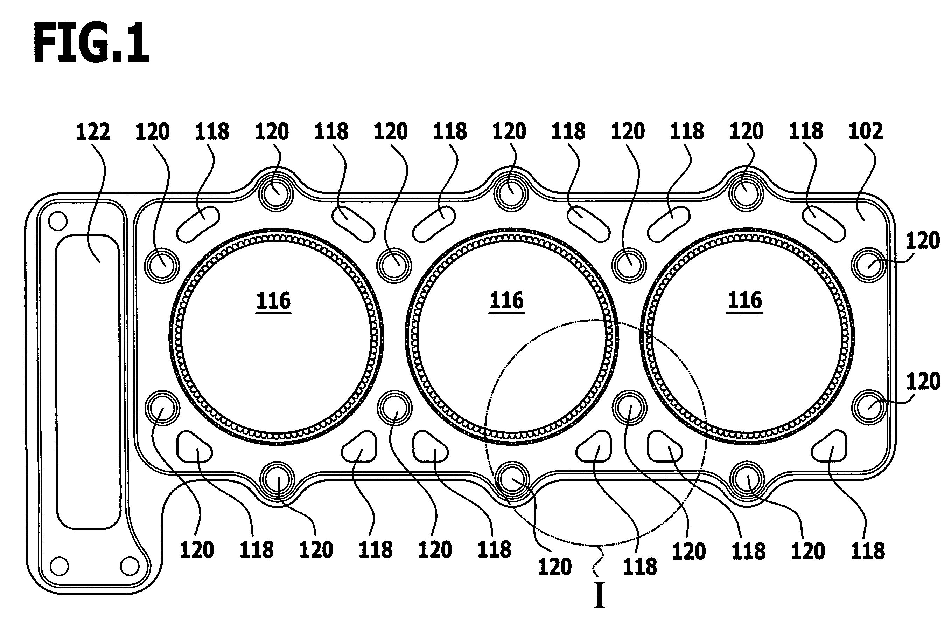

- Fig. 1: eine schematische Draufsicht auf eine metallische Dichtungsplatte einer Zylinderkopfdichtung, wobei die Dichtungsplatte Brennraum-Durchgangsöffnungen aufweist, die von Abdichtsicken umschlossen sind und an deren Rand als Bördelfalze ausgebildete Stopperelemente angeordnet sind;

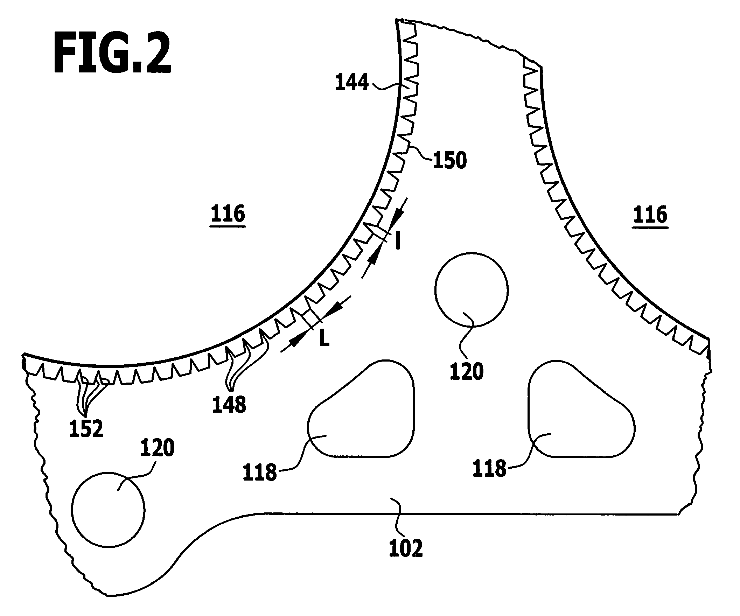

- Fig. 2: eine vergrößerte Darstellung des in Fig. 1 mit I bezeichneten Bereichs;

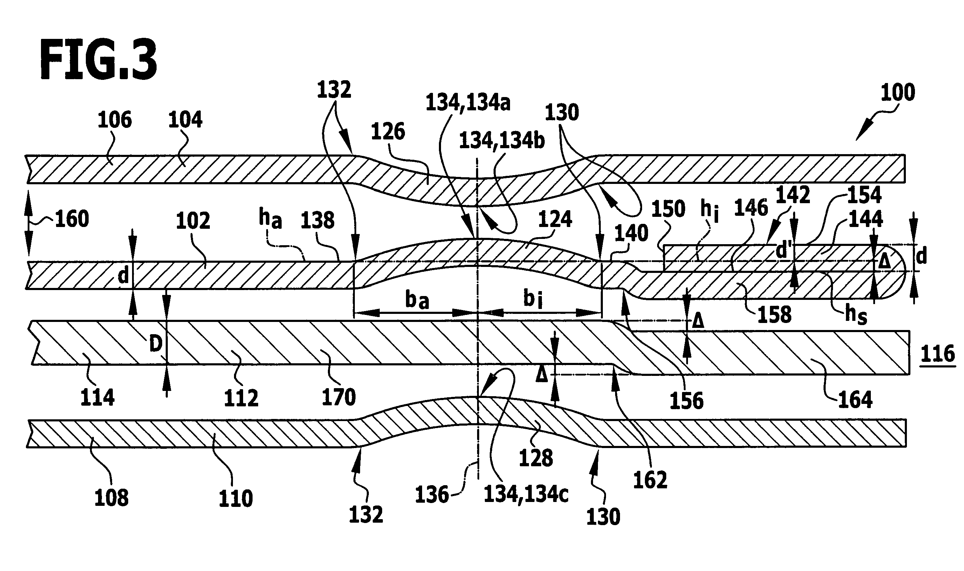

- Fig. 3: einen schematischen Querschnitt durch eine nicht unter die beigefügten Ansprüche fallende Flachdichtung, welche die gesickte Dichtungsplatte aus den Fig. 1 und 2 sowie zwei weitere gesickte Dichtungsplatten und eine abgekröpfte Trägerplatte umfasst, in einem Randbereich einer Brennraumdurchgangsöffnung, wobei an der mit dem Stopperelement versehenen Dichtungsplatte zwischen einem inneren Sickenfuß der Abdichtsicke und dem Stopperelement eine Abkröpfung vorgesehen ist und das Stopperelement auf derjenigen Seite der Dichtungsplatte angeordnet ist, zu welcher sich die Sickenkuppe der Abdichtsicke vorwölbt;

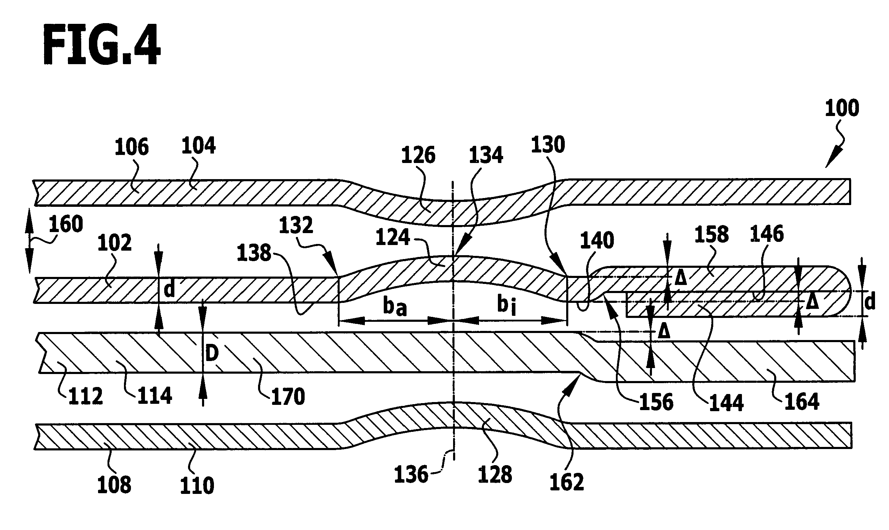

- Fig. 4: einen der Fig. 3 entsprechenden schematischen Querschnitt durch eine zweite, nicht unter die beigefügten Ansprüche fallende Ausführungsform einer Flachdichtung, bei welcher das Stopperelement auf derjenigen Seite der mit der Abdichtsicke versehenen Dichtungsplatte angeordnet ist, von welcher sich die Sickenkuppe der Abdichtsicke wegwölbt;

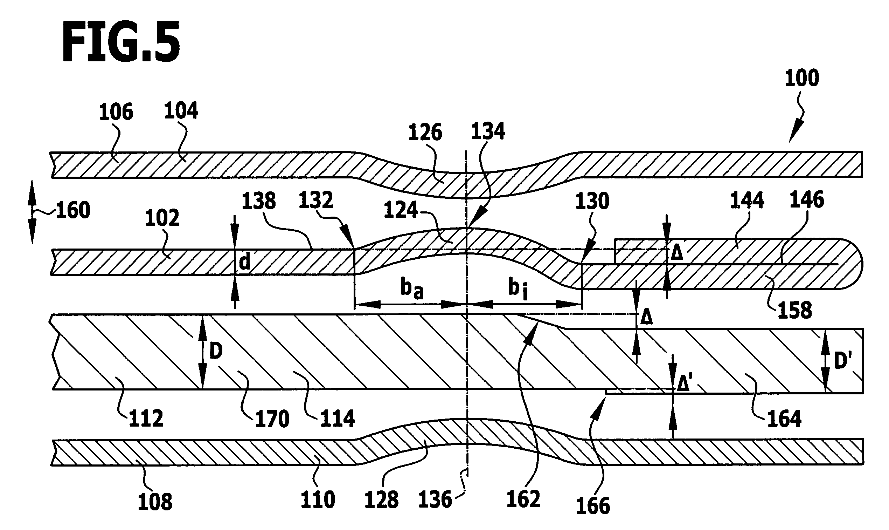

- Fig. 5: einen der Fig. 3 entsprechenden schematischen Querschnitt durch eine dritte Ausführungsform einer Flachdichtung, bei welcher die Abdichtsicke der mit dem Stopperelement versehenen Dichtungsplatte bezüglich einer senkrecht zu den Hauptflächen der Flachdichtung durch die Sickenkuppe verlaufenden Ebene asymmetrisch ausgebildet ist und die Trägerplatte an ihrer der Dichtungsplatte mit dem Stopperelement zugewandten Seite mit einer Abkröpfung und an der der Dichtungsplatte mit dem Stopperelement abgewandten Seite mit einer Stufe versehen ist;

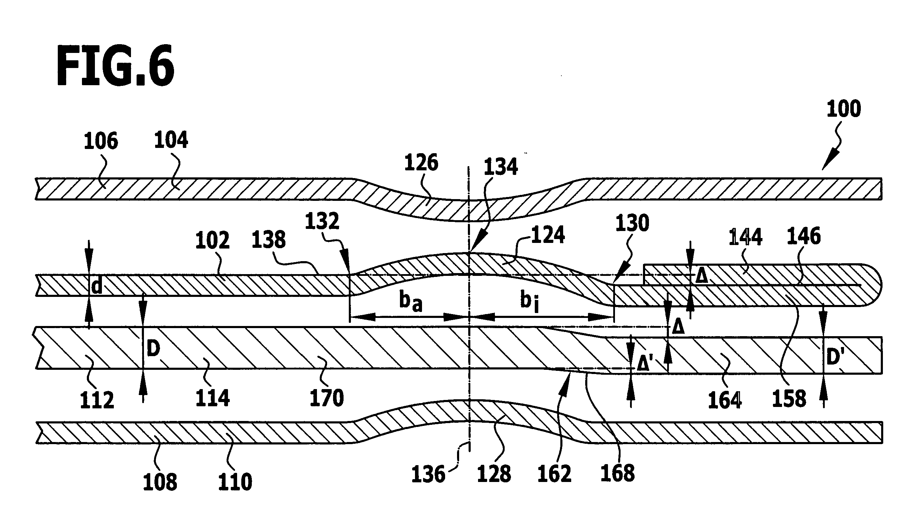

- Fig. 6: einen der Fig. 5 entsprechenden schematischen Querschnitt durch eine vierte Ausführungsform einer Flachdichtung, bei welcher der innere Sickenfuß der Abdichtsicke von der Sickenkuppe einen größeren radialen Abstand aufweist als der äußere Sickenfuß und die Trägerplatte mit einer Abkröpfung versehen und im abgekröpften Randbereich der Brennraumdurchgangsöffnung auf eine Dicke reduziert ist, welche geringer ist als die Dicke der Trägerplatte außerhalb des abgekröpften Bereichs; und

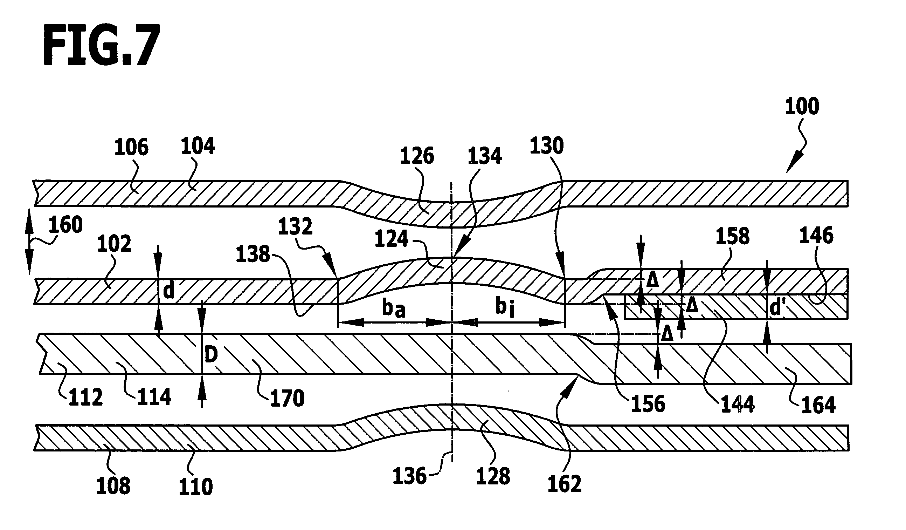

- Fig. 7: einen der Fig. 4 entsprechenden schematischen Querschnitt durch eine fünfte, nicht unter die beigefügten Ansprüche fallende Ausführungsform einer Flachdichtung, bei welcher ein separat hergestelltes, ringförmiges Stopperelement auf diejenige Seite der mit der Abdichtsicke versehenen Dichtungsplatte aufgeschweißt ist, von welcher sich die Sickenkuppe der Abdichtsicke wegwölbt.

Gleiche oder funktional äquivalente Elemente sind in allen Figuren mit denselben Bezugszeichen bezeichnet.

Eine in den Fig. 1 bis 3 dargestellte erste, nicht unter die beigefügten Ansprüche fallende Ausführungsform einer als Ganzes mit 100 bezeichneten Zylinderkopfdichtung umfasst eine erste metallische Dichtungsplatte 102, eine zweite metallische Dichtungsplatte 104 in Form einer
der ersten metallischen Dichtungsplatte 102 benachbarten ersten Decklage 106, eine dritte metallische Dichtungsplatte 108 in Form einer auf der der ersten Decklage 106 abgewandten Seite der ersten metallischen Dichtungsplatte 102 angeordneten zweiten Decklage 110 und eine vierte metallische Dichtungsplatte 112 in Form einer zwischen der ersten metallischen Dichtungsplatte 102 und der zweiten Decklage 110 angeordneten Trägerplatte 114.

Alle Platten oder Lagen der Zylinderkopfdichtung 100 sind mit jeweils miteinander fluchtenden Brennraum-Durchgangsöffnungen 116, Ölkanal- oder Wasserkanal-Durchgangsöffnungen 118, Befestigungsschrauben-Durchgangsöffnungen 120 sowie, im vorliegenden Beispiel, mit einer Kettenkasten-Durchgangsöffnung 122 versehen.

Die erste metallische Dichtungsplatte 102 und die beiden Decklagen 106 und 110 sind aus einem elastischen Federstahlblech, beispielsweise aus einem Blech des Federstahls mit der Werkstoffnummer 1.4310 (DIN 17440 oder EN 10088-3) hergestellt.

Der Federstahl der Werkstoffnummer 1.4310 weist die folgende chemische Zusammensetzung auf: 0,05 bis 0,15 Gewichtsprozent C; maximal 2,00 Gewichtsprozent Si; maximal 2,00 Gewichtsprozent Mn; maximal 0,045 Gewichtsprozent P; maximal 0,015 Gewichtsprozent S; 16,00 bis 19,00 Gewichtsprozent Cr; maximal 0,80 Gewichtsprozent Mo; 6,00 bis 9,50 Gewichtsprozent Ni; maximal 0,11 Gewichtsprozent N; Rest Fe.

Das Material der ersten Dichtungsplatte 102 weist vorzugsweise eine Zugfestigkeit von mindestens 1.350 N/mm² und eine Bruchdehnung (A₈₀ₘₘ) bei einer Anfangsmesslänge von 80 mm von ungefähr 5 % bis ungefähr 22 % auf.

Die Dicke d der Dichtungsplatte 102 und der Decklagen 106 und 110 beträgt beispielsweise ungefähr 0,2 mm bis ungefähr 0,25 mm.

Die Trägerplatte 114 ist aus einem weichen, plastisch verformbaren Stahlblech, beispielsweise aus einem Blech des Stahls mit der Werkstoffnummer 1.0338 (EN 10027-2) hergestellt.

Der Stahl mit der Werkstoffnummer 1.0338 weist die folgende chemische Zusammensetzung auf: maximal 0,08 Gewichtsprozent C; maximal 0,4 Gewichtsprozent Mn; maximal 0,03 Gewichtsprozent P; maximal 0,03 Gewichtsprozent S; Rest Fe.

Alternativ hierzu kann die Trägerplatte 114 auch beispielsweise aus einem Blech des Stahls mit der Werkstoffnummer 1.0330 (EN 10027-2) hergestellt sein.

Der Stahl mit der Werkstoffnummer 1.0330 weist die folgende chemische Zusammensetzung auf: maximal 0,120 Gewichtsprozent C; maximal 0,045 Gewichtsprozent P; maximal 0,045 Gewichtsprozent S; maximal 0,600 Gewichtsprozent Mn; Rest Fe.

Die Trägerplatte 114 ist vorzugsweise aus einem metallischen Material hergestellt, welches eine relativ geringe Zugfestigkeit (vorzugsweise eine Zugfestigkeit von höchstens ungefähr 400 N/mm²) und eine höhere Bruchdehnung (A₈₀ₘₘ) bei einer Anfangsmesslänge von 80 mm (vorzugsweise mindestens 24 %) als das metallische Material der elastischen, gesickten Dichtungsplatten 102, 104 und 108 aufweist.

Jede der Dichtungsplatten 102, 104 und 108 ist mit jeweils mindestens einer Sicke 124, 126 bzw. 128 versehen, welche sich um jeweils eine der Brennraum-Durchgangsöffnungen 116 herum erstreckt. Es kann auch vorgesehen sein, dass jede der Dichtungsplatten 102, 104 und 108 nur mit jeweils einer Sicke 124, 126 bzw. 128 versehen ist, welche sich um alle Brennraum-Durchgangsöffnungen 116 der jeweiligen Dichtungsplatte herum erstreckt.

Jede der Sicken 124, 126 und 128 ist als eine Vollsicke ausgebildet und wird auf ihrer der Brennraum-Durchgangsöffnung 116 zugewandten Seite durch einen inneren Sickenfuß 130 und auf ihrer der Brennraum-Durchgangsöffnung 116 abgewandten Seite durch einen äußeren Sickenfuß 132 begrenzt. Zwischen dem inneren Sickenfuß 130 und dem äußeren Sickenfuß 132 jeder Sicke 124, 126 bzw. 128 verläuft eine Sickenkuppe 134, wobei die Sickenkuppe 134a der Sicke 124 und die Sickenkuppe 134b der Sicke 126 einander zugewandt sind und die Sickenkuppe 134c der Sicke 128 sich zu der ersten Dichtungsplatte 102 hin vorwölbt.

Die Sicken 124, 126 und 128 sind bezüglich einer durch ihre jeweilige Sickenkuppe 134 und senkrecht zu den Hauptflächen der Dichtungsplatten verlaufenden Ebene 136 im wesentlichen spiegelsymmetrisch ausgebildet, so dass der radiale Abstand bᵢ zwischen der Sickenkuppe 134 und dem inneren Sickenfuß 130 im wesentlichen gleich groß ist wie der radiale Abstand bₐ zwischen der Sickenkuppe 134 und dem äußeren Sickenfuß 132.

Ferner liegt ein an den äußeren Sickenfuß angrenzender, außerhalb der Sicke 124 gelegener Teil 138 der Oberfläche der Dichtungsplatte 102, der auf derselben Seite der Dichtungsplatte 102 angeordnet ist, zu welcher sich die Sickenkuppe 134a hin vorwölbt, bezogen auf eine zu den Hauptflächen der Dichtungsplatte 102 senkrechten Richtung 160 auf demselben Höhenniveau (hₐ) wie ein an den inneren Sickenfuß 130 angrenzender, ebenfalls außerhalb der Sicke 124 gelegener Teil 140 der Oberfläche der Dichtungsplatte 102 (Höhenniveau hᵢ).

Die die Brennraumdurchgangsöffnungen 116 umgebenden Sicken 124, 126 und 128 sind elastisch höhenverformbar.

Um eine Beschädigung der Sicken 124, 126 und 128 aufgrund der im Betrieb des Verbrennungsmotors auftretenden Dichtspaltvariationen zu vermeiden, umfasst die Zylinderkopfdichtung 100 eine Verformungsbegrenzungseinrichtung 142, welche ein an der ersten Dichtungsplatte 102 angeordnetes Stopperelement 144 umfasst, das als ein längs des Randes der Brennraum-Durchgangsöffnung 116 umgebogener und auf eine Stopperauflagefläche 146 der ersten Dichtungsplatte 102 zurückgefalteter Randbereich der ersten Dichtungsplatte 102 ausgebildet ist.

Das Stopperelement 144 erhöht somit die Dicke der ersten Dichtungsplatte 102 im Randbereich der Brennraum-Durchgangsöffnung 116, so dass die Sicken 124 und 126 nicht mehr auf Block verformt und somit nicht beschädigt werden können.

Um auf diese Weise ein Stopperelement 144 beliebiger Breite herstellen zu können, wird im an die Brennraum-Durchgangsöffnung 116 angrenzenden Randbereich der ersten Dichtungsplatte 102 vor dem Umlegen des Stopperelements 144 eine Vielzahl von Einschnitten 148 erzeugt, welche sich nach dem Umlegen des Stopperelements 144 auf die Stopperauflagefläche 146 von dem freien äußeren Rand 150 des Stopperelements 144 aus radial nach innen, d.h. zu der Brennraum-Durchgangsöffnung 116 hin, erstrecken und längs der Umfangsrichtung des Stopperelements 144 und der Brennraum-Durchgangsöffnung 116 im wesentlichen äquidistant aufeinanderfolgen (siehe insbesondere Fig. 2).

Die Winkelabstände der längs der Umfangsrichtung der Brennraum-Durchgangsöffnung 116 aufeinanderfolgenden Einschnitte 148 liegen vorzugsweise zwischen ungefähr 1° und ungefähr 20°.

Die Einschnitte 148 werden beispielsweise durch Einschneiden mittels eines mechanischen Schneidwerkzeugs, durch Ausstanzen mittels eines mechanischen Stanzwerkzeuges oder durch Laserschneiden mittels eines Laserstrahls erzeugt.

Vorzugsweise werden die Einschnitte 148 im wesentlichen materialverlustfrei vor dem Umlegen in dem Stopperelement 144 erzeugt.

Nach dem Umlegen des Stopperelements 144 verlaufen die seitlichen Ränder 152 der Einschnitte 148 keilförmig aufeinander zu, wie in Fig. 2 dargestellt.

Nach dem Umlegen ist die mittlere Länge L der einschnittfreien Bereiche des freien äußeren Randes 150 des Stopperelements 144 zwischen den in der Längsrichtung des Stopperelements 144 aufeinanderfolgenden Einschnitten 148 größer als die mittlere Erstreckung I der Einschnitte 148 in der Längsrichtung des Stopperelements 144 an dessen freiem äußerem Rand 150.

Da das Stopperelement 144 durch Umlegen eines an die Brennraum-Durchgangsöffnung 116 angrenzenden Randbereichs der ersten Dichtungsplatte 102 erzeugt wird, entspricht die Dicke d des Stopperelements 144 der Dicke d der ersten Dichtungsplatte 102.

Die zur Verformungsbegrenzung der Sicke 124 wirksame effektive Höhe d' des Stopperelements 144 entspricht dem Überstand der der Stopperauflagefläche 146 entgegengesetzten Außenfiläche 154 des Stopperelements 144 über den an den äußeren Sickenfuß 132 angrenzenden Teil 138 der Oberfläche der Dichtungsplatte 102.

Um diesen Überstand d' gegenüber der Dicke d der Dichtungsplatte 102 zu verringern, ist die Dichtungsplatte 102 zwischen dem inneren Sickenfuß 130 und dem freien äußeren Rand 150 des Stopperelements 144 mit einer Abkröpfung 156 versehen.

Diese Abkröpfung 156 ist so ausgebildet, dass der zwischen der Abkröpfung 156 und der Brennraum-Durchgangsöffnung 116 liegende abgekröpfte Bereich 158 der Dichtungsplatte 102 um eine Höhe Δ gegenüber dem radial außerhalb der Abkröpfung 156 liegenden Teil der Dichtungsplatte 102 zu der dem Stopperelement 144 abgewandten Seite der Dichtungsplatte 102 hin abgekröpft ist.

Durch diese Abkröpfung 156 ist die Stopperauflagefläche 146, welche sich auf dem Höhenniveau hₛ befindet, gegenüber dem an den äußeren Sickenfuß 132 angrenzenden, außerhalb der Sicke 124 gelegenen Teil 138 der Oberfläche der ersten Dichtungsplatte 102, der auf derselben Seite der Dichtungsplatte 102 angeordnet ist wie die Stopperauflagefläche 146, in der senkrecht zur Stopperauflagefläche 146 verlaufenden Richtung 160 um den Versatz Δ versetzt.

Durch diesen Versatz Δ ist die effektive Stopperhöhe d' des Stopperelements 144 auf den Betrag d-Δ gegenüber der Dicke d der ersten Dichtungsplatte 102 reduziert.

Der Versatz Δ kann beispielsweise ungefähr 20 µm bis ungefähr 40 µm betragen.

Damit im verpressten Betriebszustand der Zylinderkopfdichtung 100 sowohl die Sickenfüße 130 und 132 der Sicke 124 als auch der abgekröpfte Bereich 158 der ersten Dichtungsplatte 102 an der Trägerplatte 114 aufliegen und sich an derselben abstützen können, ist auch die Trägerplatte 114 mit einer Abkröpfung 162 versehen, welche dieselbe Höhe Δ aufweist wie die Abkröpfung 156 der ersten Dichtungsplatte 102 und in radialer Richtung zwischen der Abkröpfung 156 der ersten Dichtungsplatte 102 und der Sicke 124 der ersten Dichtungsplatte 102 angeordnet ist.

Die Abkröpfung 162 ist so ausgebildet, dass der an die Brennraum-Durchgangsöffnung 116 angrenzende abgekröpfte Bereich 164 der Trägerplatte 114 zu der dritten Dichtungsplatte 108 hin abgekröpft ist.

Dadurch wirkt der abgekröpfte Bereich 164 der Trägerplatte 114, der von dem abgekröpften Bereich 158 der ersten Dichtungsplatte 102 und von dem Stopperelement 144 abgestützt wird, als Verformungsbegrenzungseinrichtung für die Sicke 128 der dritten Dichtungsplatte 108, mit einer effektiven Stopperhöhe, welche der Höhe Δ der Abkröpfung 162 entspricht.

Die Dicke D der Trägerplatte 114 ist vorzugsweise größer als die Dicke der gesickten Dichtungsplatten 102, 104 und 108 und kann beispielsweise ungefähr 0,3 mm bis ungefähr 0,8 mm betragen.

Die Dicke d der gesickten Dichtungsplatten 102, 104 und 108 beträgt vorzugsweise ungefähr 0,1 mm bis ungefähr 0,3 mm.

Die Gesamtbreite (bₐ+bᵢ) der Sicken 124, 126 und 128 liegt vorzugsweise im Bereich von ungefähr 2 mm bis ungefähr 3 mm.

Eine in Fig. 4 dargestellte zweite, nicht unter die beigefügten Ansprüche fallende Ausführungsform einer Zylinderkopfdichtung 100 unterscheidet sich von der vorstehend beschriebenen ersten Ausführungsform dadurch, dass das Stopperelement 144 bei dieser zweiten Ausführungsform nicht an der der ersten Decklage 106 zugewandten Seite der ersten Dichtungsplatte 102, sondern stattdessen an der der Trägerplatte 114 zugewandten Seite der ersten Dichtungsplatte 102 angeordnet ist, was dadurch erreicht wird, dass der das Stopperelement 144 bildende Randbereich der ersten Dichtungsplatte 102 nicht nach oben, sondern nach unten umgebogen und auf die erste Dichtungsplatte 102 zurückgefaltet worden ist.

Infolgedessen wird die Abkröpfung 156 der ersten Dichtungsplatte 102 in diesem Fall, um die effektive Stopperhöhe des Stopperelements 144 zu reduzieren, so ausgeführt, dass der abgekröpfte Bereich 158 der ersten Dichtungsplatte 102 nicht zu der Trägerplatte 114, sondern stattdessen zu der ersten Decklage 106 hin um die Höhe Δ abgekröpft ist.

Aufgrund dieser Abkröpfung ist bei dieser Ausführungsform der Zylinderkopfdichtung 100 die nunmehr zu der Trägerplatte 114 hin weisende Stopperauflagefläche 146 gegenüber dem an den äußeren Sickenfuß 132 angrenzenden, außerhalb der Sicke 124 liegenden Teil 138 der Oberfläche der ersten Dichtungsplatte 102, der auf derselben Seite der Dichtungsplatte 102 angeordnet ist wie die Stopperauflagefläche 146, in der senkrecht zur Stopperauflagefläche 146 verlaufenden Richtung 160 um den Versatz Δ versetzt.

Durch diesen Versatz Δ ist der Überstand des Stopperelements 144 über die Sickenfüße 130, 132 auf der der Trägerplatte 114 zugewandten Seite der ersten Dichtungsplatte 102 auf den Wert d-Δ reduziert.

Im übrigen stimmt die in Fig. 4 dargestellte zweite Ausführungsform einer Zylinderkopfdichtung 100 hinsichtlich Aufbau und Funktion mit der in den Fig. 1 bis 3 dargestellten Ausführungsform überein, auf deren vorstehende Beschreibung insoweit Bezug genommen wird.

Eine in Fig. 5 dargestellte dritte Ausführungsform einer Zylinderkopfdichtung 100 unterscheidet sich von der in den Fig. 1 bis 3 dargestellten ersten Ausführungsform dadurch, dass der Versatz Δ zwischen der Stopperauflagefläche 146 und dem an den äußeren Sickenfuß 132 angrenzenden Teil 138 der Oberfläche der ersten Dichtungsplatte 102 nicht durch eine Abkröpfung zwischen dem Stopperelement 144 und der Sicke 124 der ersten Dichtungsplatte 102, sondern stattdessen durch eine asymmetrische Gestaltung der Sicke 124 erzeugt wird.

Hierzu wird die Sicke 124 so ausgebildet, dass der innere Sickenfuß 130 um den Versatz Δ tiefer liegt als der äußere Sickenfuß 132.

Der radiale Abstand bᵢ des inneren Sickenfußes 130 von der Sickenkuppe 134 ist bei dieser Ausführungsform im wesentlichen gleich groß wie der radiale Abstand bₐ des äußeren Sickenfußes 132 von der Sickenkuppe 134.

Die Abkröpfung 162 der Trägerplatte 114 ist bei dieser Ausführungsform radial außerhalb des inneren Sickenfußes 130 der ersten Dichtungsplatte 102 angeordnet, so dass der innere Sickenfuß 130 der Sicke 124 auf dem um die Höhe Δ abgekröpften Bereich 164 der Trägerplatte 114 aufliegt, während der äußere Sickenfuß 132 auf dem nicht abgekröpften Bereich der Trägerplatte 114 aufliegt.

Dadurch, dass bei dieser Ausführungsform der Zylinderkopfdichtung 100 der innere Sickenfuß 130 gegenüber dem äußeren Sickenfuß 132 um die Höhe Δ zu der Trägerplatte 114 hin versetzt ist, ist auch die Stopperauflagefläche 146, welche bei dieser Ausführungsform der Trägerplatte 114 abgewandt ist, gegenüber dem an den äußeren Sickenfuß 132 angrenzenden, außerhalb der Sicke 124 gelegenen Teil 138 der Oberfläche der ersten Dichtungsplatte 102, der auf derselben Seite der Dichtungsplatte 102 angeordnet ist wie die Stopperauflagefläche 146, in der senkrecht zur Stopperauflagefläche 146 verlaufenden Richtung 160 um den Versatz Δ versetzt.

Die effektive Stopperhöhe des Stopperelements 144 ist dadurch auf den Wert d-Δ reduziert.

Die bei den ersten beiden Ausführungsformen zwischen dem Stopperelement 144 und der Sicke 124 der ersten Dichtungsplatte 102 vorgesehene Abkröpfung 156 entfällt bei dieser Ausführungsform; grundsätzlich ist es aber auch möglich, eine asymmetrische Ausbildung der Sicke 124 mit einer zwischen der Sicke 124 und dem Stopperelement 144 vorgesehenen Abkröpfung zu kombinieren, um den gewünschten Versatz Δ zu erhalten.

Ferner ist bei der in Fig. 5 dargestellten dritten Ausführungsform einer Zylinderkopfdichtung 100 die Dicke D' des abgekröpften Bereichs 164 der Trägerplatte 114 gegenüber der Dicke D des nicht abgekröpften Bereichs 170 der Trägerplatte 114 durch einen Prägevorgang reduziert worden. Durch diesen Prägevorgang wird auch die Abkröpfung der Trägerplatte 114 an deren der ersten Dichtungsplatte 102 abgewandten Seite auf eine Stufe 166 der Höhe Δ' reduziert, wobei gilt Δ'=Δ+D'-D.

Ferner wird der Prägevorgang der Trägerplatte 114 so durchgeführt, dass die Stufe 166 radial innerhalb der Sicke 128 der zweiten Decklage 110 angeordnet ist.

Auf diese Weise wirkt der radial innerhalb der Stufe 166 liegende Bereich der Trägerplatte 114 als eine Verformungsbegrenzungseinrichtung für die Sicke 128 der zweiten Decklage 110, wobei die effektive Stopperhöhe dieser Verformungsbegrenzungseinrichtung Δ' durch die Reduzierung der Dicke des abgekröpften Bereichs 164 der Trägerplatte 114 gegenüber der Höhe Δ der Abkröpfung 162 reduziert ist.

Im übrigen stimmt die in Fig. 5 dargestellte dritte Ausführungsform einer Zylinderkopfdichtung 100 hinsichtlich Aufbau und Funktion mit der in den Fig. 1 bis 3 dargestellten ersten Ausführungsform überein, auf deren vorstehende Beschreibung insoweit Bezug genommen wird.

Eine in Fig. 6 dargestellte vierte Ausführungsform einer Zylinderkopfdichtung 100 unterscheidet sich von der in Fig. 5 dargestellten dritten Ausführungsform dadurch, dass die Sicke 124 der ersten Dichtungsplatte 102 nicht nur hinsichtlich der Höhenniveaus der Sickenfüße 130 und 132, sondern auch bezüglich des radialen Abstands der Sickenfüße 130 und 132 von der Sickenkuppe 134 unsymmetrisch ausgebildet ist.

Die Sicke 124 wird nämlich so ausgebildet, dass der innere Sickenfuß 130, welcher eine größere Höhendifferenz zur Sickenkuppe 134 aufweist, in einem größeren Abstand bᵢ von der durch die Sickenkuppe 134 verlaufenden Ebene 136 verläuft, während der eine kleinere Höhendifferenz zur Sickenkuppe 134 aufweisende äußere Sickenfuß 132 in einem kleineren Abstand bₐ von der Ebene 136 verläuft.

Durch diese unterschiedliche Breite der Sicke 124 auf der der Brennraum-Durchgangsöffnung 116 zugewandten Seite (bᵢ) einerseits und auf der der Brennraum-Durchgangsöffnung 116 abgewandten Seite (bₐ) andererseits kann erreicht werden, dass die asymmetrisch ausgebildete Sicke 124 eine mit einer symmetrisch ausgebildeten Vollsicke vergleichbare Kraft-Verformungs-Kennlinie aufweist.

Beispielsweise kann der radiale Abstand bᵢ des inneren Sickenfußes 130 von der Sickenkuppe 134 im Bereich von ungefähr 1,4 mm bis ungefähr 1,5 mm liegen, während der radiale Abstand bₐ des äußeren Sickenfußes 132 von der Sickenkuppe 134 im Bereich von ungefähr 1,1 mm bis ungefähr 1,3 mm liegen kann.

Auch bei der in Fig. 6 dargestellten vierten Ausführungsform ist die Dicke D' des abgekröpften Bereichs 164 der Trägerplatte 114 gegenüber der Dicke D der Trägerplatte 114 in deren nicht abgekröpftem Bereich 170 durch einen Prägevorgang reduziert.

Allerdings ist dieser Prägevorgang so ausgeführt, dass, anders als bei der in Fig. 5 dargestellten dritten Ausführungsform, keine senkrecht zur Hauptfläche der Trägerplatte 114 verlaufende Stufe 166, sondern stattdessen ein unter einem spitzen Winkel gegen die Hauptfläche der Trägerplatte 114 geneigter Bereich 168 entsteht.

Auch bei dieser Ausführungsform bildet der abgekröpfte Bereich 164 der Trägerplatte 114, der über die untere Hauptfläche der Trägerplatte 114 um den Betrag Δ'=Δ+D'-D übersteht, eine Verformungsbegrenzungseinrichtung für die Sicke 128 der dritten Dichtungsplatte 108, mit einer gegenüber dem Versatz Δ reduzierten effektiven Stopperhöhe Δ'.

Im übrigen stimmt die in Fig. 6 dargestellte vierte Ausführungsform einer Zylinderkopfdichtung 100 hinsichtlich Aufbau und Funktion mit der in Fig. 5 dargestellten dritten Ausführungsform überein, auf deren vorstehende Beschreibung insoweit Bezug genommen wird.

Eine in Fig. 7 dargestellte fünfte, nicht unter die beigefügten Ansprüche fallende Ausführungsform einer Zylinderkopfdichtung 100 unterscheidet sich von der in Fig. 4 dargestellten zweiten Ausführungsform dadurch, dass das Stopperelement 144 nicht als ein umgebogener Randbereich der ersten Dichtungsplatte 102, sondern stattdessen als ein separat von der Dichtungsplatte 102 hergestelltes ringförmiges Element ausgebildet ist, welches auf die Stopperauflagefläche 146 aufgelegt und mit derselben verschweißt worden ist.

Diese Verschweißung kann mittels einer oder mehrerer kontinuierlich um die Brennraumdurchgangsöffnung 116 umlaufender Schweißlinien oder mittels einer oder mehrerer längs der Brennraumdurchgangsöffnung 116 umlaufender Reihen von Schweißpunkten, bei denen aufeinanderfolgende Schweißpunkte einander überlappen oder getrennt voneinander angeordnet sein können, erfolgen.

In dem in Fig. 7 dargestellten Ausführungsbeispiel ist die Dicke d' des aufgeschweißten, ringförmigen Stopperelements 144 im wesentlichen gleich groß wie die Dicke d der ersten Dichtungsplatte 102.

Grundsätzlich ist es aber auch möglich, die Dicke d' des Stopperelements 144 kleiner oder größer zu wählen als die Dicke d der ersten Dichtungsplatte 102.

Im übrigen stimmt die in Fig. 7 dargestellte fünfte Ausführungsform einer Zylinderkopfdichtung 100 hinsichtlich Aufbau und Funktion mit der in Fig. 4 dargestellten zweiten Ausführungsform überein, auf deren vorstehende Beschreibung insoweit Bezug genommen wird.

## Patentansprüche

1. Flachdichtung, insbesondere Zylinderkopfdichtung (100), umfassend mindestens eine Dichtungsplatte (102), die mindestens eine Durchgangsöffnung (116) und mindestens eine Abdichtsicke (124), welche sich um die Durchgangsöffnung (116) herum erstreckt und auf der der Durchgangsöffnung (116) zugewandten Seite durch einen inneren Sickenfuß (130) und auf der der Durchgangsöffnung (116) abgewandten Seite durch einen äußeren Sickenfuß (132) begrenzt ist und eine zwischen dem inneren Sickenfuß (130) und dem äußeren Sickenfuß (132) verlaufende Sickenkuppe (134) aufweist, umfasst, und
mindestens eine die Verformung der Abdichtsicke (124) begrenzende Verformungsbegrenzungseinrichtung (142) mit einer Stopperauflagefläche (146) der Dichtungsplatte (102),
wobei die Stopperauflagefläche (146) gegenüber einem an den äußeren Sickenfuß (132) angrenzenden, außerhalb der Abdichtsicke (124) gelegenen Teil (138) der Oberfläche der Dichtungsplatte (102), der auf derselben Seite der Dichtungsplatte (102) angeordnet ist wie die Stopperauflagefläche (146), in einer senkrecht zur Stopperauflagefläche (146) verlaufenden Richtung (160) um einen Versatz (Δ) versetzt ist,
wobei die Flachdichtung neben der Dichtungsplatte (102), die mit der Abdichtsicke (124) und dem Stopperelement (144) versehen ist, noch mindestens eine Trägerplatte (114) umfasst,
wobei die Flachdichtung mindestens eine weitere Dichtungsplatte (108) umfasst, die mit mindestens einer sich um die Durchgangsöffnung (116) herum erstreckenden Abdichtsicke (128) versehen ist und auf derjenigen Seite der Trägerplatte (114) angeordnet ist, welche der Dichtungsplatte (102), die mit der Abdichtsicke (124) und dem Stopperelement (144) versehen ist, abgewandt ist, und
wobei ein Bereich (164) der Trägerplatte (114) als Verformungsbegrenzungseinrichtung für die Abdichtsicke (128) der weiteren Dichtungsplatte (108) dient,
**dadurch gekennzeichnet,**
**dass** die Verformungsbegrenzungseinrichtung (142) mindestens ein auf der Stopperauflagefläche (146) der Dichtungsplatte (102) angeordnetes Stopperelement (144) umfasst,
**dass** die Trägerplatte (114) eine Abkröpfung (162) umfasst und
**dass** die Abdichtsicke (124) unsymmetrisch bezüglich einer durch ihre Sickenkuppe (134) und senkrecht zur Stopperauflagefläche (146) verlaufenden Ebene (136) ausgebildet ist, wobei der innere Sickenfuß (130) auf einem anderen Höhenniveau verläuft als der äußere Sickenfuß (132).

2. Flachdichtung nach Anspruch 1, **dadurch gekennzeichnet, dass** der Versatz (Δ) mindestens ungefähr 10 %, vorzugsweise ungefähr mindestens 20 %, der Dicke (d) des Stopperelements (144) beträgt.

3. Flachdichtung nach einem der Ansprüche 1 oder 2, **dadurch gekennzeichnet, dass** der Versatz (Δ) mindestens ungefähr 20 µm, vorzugsweise ungefähr 40 µm, beträgt.

4. Flachdichtung nach einem der Ansprüche 1 bis 3, **dadurch gekennzeichnet, dass** der Versatz (Δ) weniger als die Dicke (d) des Stopperelements (144) beträgt.

5. Flachdichtung nach einer der Ansprüche 1 bis 4, **dadurch gekennzeichnet, dass** der Versatz (Δ) weniger als ungefähr 0,3 mm beträgt.

6. Flachdichtung nach einem der Ansprüche 1 bis 5, **dadurch gekennzeichnet, dass** das Stopperelement (144) auf derjenigen Seite der Dichtungsplatte (102) angeordnet ist, zu welcher sich die Sickenkuppe (134) der Abdichtsicke (124) vorwölbt.

7. Flachdichtung nach einem der Ansprüche 1 bis 6, **dadurch gekennzeichnet, dass** das Stopperelement (144) auf derjenigen Seite der Dichtungsplatte (102) angeordnet ist, welche der Seite entgegengesetzt ist, zu welcher sich die Sickenkuppe (134) der Abdichtsicke (124) vorwölbt.

8. Flachdichtung nach einem der Ansprüche 1 bis 7, **dadurch gekennzeichnet, dass** die Flachdichtung neben der Dichtungsplatte (102), die mit der Abdichtsicke (124) und dem Stopperelement (144) versehen ist, noch mindestens eine weitere Dichtungsplatte (104) umfasst, welche mit mindestens einer sich um die Durchgangsöffnung (116) herum erstreckenden Abdichtsicke (126) versehen ist.

9. Flachdichtung nach einem der Ansprüche 1 bis 8, **dadurch gekennzeichnet, dass** die Flachdichtung neben der Dichtungsplatte (102), die mit der Abdichtsicke (124) und dem Stopperelement (144) versehen ist, noch mindestens zwei weitere Dichtungsplatten (104) umfasst, zwischen denen die Dichtungsplatte (102), die mit der Abdichtsicke (124) und dem Stopperelement (144) versehen ist, angeordnet ist.

10. Flachdichtung nach einem der Ansprüche 1 bis 9, **dadurch gekennzeichnet, dass** die Höhe der Abkröpfung (162) im Wesentlichen dem Versatz (Δ) der Stopperauflagefläche (146) entspricht.

11. Flachdichtung nach einem der Ansprüche 1 bis 10, **dadurch gekennzeichnet, dass** der abgekröpfte Bereich (164) der Trägerplatte (114), der sich um die Durchgangsöffnung (116) herum erstreckt, eine geringere Dicke (D') aufweist als der außerhalb des abgekröpften Bereichs (164) liegende Bereich (170) der Trägerplatte (114).

12. Flachdichtung nach einem der Ansprüche 1 bis 11, **dadurch gekennzeichnet, dass** die mit der Abkröpfung (162) versehene Trägerplatte (114) der Dichtungsplatte (102), die mit der Abdichtsicke (124) und dem Stopperelement (144) versehen ist, unmittelbar benachbart ist.

13. Flachdichtung nach einem der Ansprüche 1 bis 12, **dadurch gekennzeichnet, dass** der abgekröpfte Bereich (164) der Trägerplatte (114) zu der der Dichtungsplatte (102), die mit der Abdichtsicke (124) und dem Stopperelement (144) versehen ist, abgewandten Seite hin abgekröpft ist.

14. Flachdichtung nach einem der Ansprüche 1 bis 13, **dadurch gekennzeichnet, dass** die Dichtungsplatte (102), die mit der Abdichtsicke (124) und dem Stopperelement (144) versehen ist, eine zwischen dem inneren Sickenfuß (130) und dem Stopperelement (144) verlaufende Abkröpfung (156) aufweist.

15. Flachdichtung nach Anspruch 14, **dadurch gekennzeichnet, dass** der abgekröpfte Bereich (158) der Dichtungsplatte (102) zu derjenigen Seite der Dichtungsplatte (102) hin abgekröpft ist, zu welcher sich die Sickenkuppe (134) der Abdichtsicke (124) vorwölbt.

16. Flachdichtung nach Anspruch 14, **dadurch gekennzeichnet, dass** der abgekröpfte Bereich (158) der Dichtungsplatte (102) zu derjenigen Seite der Dichtungsplatte (102) hin abgekröpft ist, die der Seite abgewandt ist, zu welcher sich die Sickenkuppe (134) der Abdichtsicke (124) vorwölbt.

17. Flachdichtung nach einem der Ansprüche 1 bis 16, **dadurch gekennzeichnet, dass** der äußere Sickenfuß (132) gegenüber dem inneren Sickenfuß (130) zu derjenigen Seite der Dichtungsplatte (102) hin versetzt ist, zu welcher sich die Sickenkuppe der Abdichtsicke (124) vorwölbt.

18. Flachdichtung nach einem der Ansprüche 1 bis 16, **dadurch gekennzeichnet, dass** der äußere Sickenfuß (132) gegenüber dem inneren Sickenfuß (130) zu derjenigen Seite der Dichtungsplatte (102) hin versetzt ist, die der Seite der Dichtungsplatte (102) abgewandt ist, zu welcher sich die Sickenkuppe der Abdichtsicke (124) vorwölbt.

19. Flachdichtung nach einem der Ansprüche 1 bis 18, **dadurch gekennzeichnet, dass** der radiale Abstand (bᵢ) des inneren Sickenfußes (130) von der Sickenkuppe (134) von dem radialen Abstand (bₐ) des äußeren Sickenfußes (132) von der Sickenkuppe (134) verschieden ist.

20. Flachdichtung nach Anspruch 19, **dadurch gekennzeichnet, dass** der radiale Abstand (bᵢ, bₐ) von der Sickenkuppe (134) bei demjenigen Sickenfuß (130), welcher eine größere Höhendifferenz zur Sickenkuppe (134) aufweist, größer ist als bei demjenigen Sickenfuß (132), der eine kleinere Höhendifferenz zur Sickenkuppe (134) aufweist.

21. Flachdichtung nach einem der Ansprüche 1 bis 20, **dadurch gekennzeichnet, dass** das Stopperelement (144) als ein umgebogener Bereich der Dichtungsplatte (102), die mit der Abdichtsicke (124) und dem Stopperelement (144) versehen ist, ausgebildet ist.

22. Flachdichtung nach Anspruch 21, **dadurch gekennzeichnet, dass** das Stopperelement (144) mehrere Einschnitte (148) aufweist, die sich von einem der Durchgangsöffnung (116) abgewandten Rand (150) des Stopperelements (144) aus in Richtung auf die Durchgangsöffnung (116) erstrecken.

23. Flachdichtung nach Anspruch 22, **dadurch gekennzeichnet, dass** die mittlere Länge (L) der einschnittfreien Bereiche des Randes (150) des Stopperelements (144) zwischen den in der Längsrichtung des Stopperelements (144) aufeinanderfolgenden Einschnitten (148) größer ist als die mittlere Erstreckung (I) der Einschnitte (148) in der Längsrichtung des Stopperelements (144) am Rand (150) des Stopperelements (144).

24. Flachdichtung nach einem der Ansprüche 22 oder 23, **dadurch gekennzeichnet, dass** die Einschnitte (148) durch mechanisches Schneiden, durch Stanzen oder durch Laserschneiden erzeugt sind.

25. Flachdichtung nach einem der Ansprüche 22 bis 24, **dadurch gekennzeichnet, dass** die Einschnitte (148) durch im Wesentlichen materialverlustfreies Einschneiden in die Dichtungsplatte (102) erzeugt sind.

## Claims

1. Flat gasket, in particular a cylinder head gasket (100), comprising at least one gasket sheet (102), which comprises at least one through-opening (116) and at least one sealing bead (124), which extends around the through-opening (116) and is delimited at the side facing the through-opening (116) by an inner bead foot (130) and at the side remote from the through-opening (116) by an outer bead foot (132) and has a bead crest (134) extending between the inner bead foot (130) and the outer bead foot (132), and
at least one deformation-limiting device (142) limiting the deformation of the sealing bead (124) with a stopper-supporting surface (146) of the gasket sheet (102),
wherein the stopper-supporting surface (146) is shifted in a direction (160) extending at right angles to the stopper-supporting surface (146) by an offset (Δ) relative to a part (138) of the surface of the gasket sheet (102) that adjoins the outer bead foot (132) and is situated outside of the sealing bead (124) and disposed at the same side of the gasket sheet (102) as the stopper-supporting surface (146),
wherein the flat gasket, besides the gasket sheet (102) that is provided with the sealing bead (124) and the stopper element (144), additionally comprises at least one carrier sheet (114),
wherein the flat gasket comprises at least one further gasket sheet (108), which is provided with at least one sealing bead (128) extending around the through-opening (116) and is disposed at the side of the carrier sheet (114) that is remote from the gasket sheet (102) provided with the sealing bead (124) and the stopper element (144) and
wherein a region (164) of the carrier sheet (114) serves as a deformation-limiting device for the sealing bead (128) of the further gasket sheet (108),
**characterised in that**
the deformation-limiting device (142) comprises at least one stopper element (144) disposed on the stopper-supporting surface (146) of the gasket sheet (102), **in that**
the carrier sheet (114) has an offset (162), and **in that** the sealing bead (124) is designed asymmetrically in relation to a plane (136) extending through its bead crest (134) and at right angles to the stopper-supporting surface (146), wherein the inner bead foot (130) extends at a different height level to the outer bead foot (132).

2. Flat gasket according to claim 1, **characterised in that** the offset (Δ) is at least approximately 10%, preferably approximately at least 20% of the thickness (d) of the stopper element (144).

3. Flat gasket according to claim 1 or 2, **characterised in that** the offset (Δ) is at least approximately 20 µm, preferably approximately 40 µm.

4. Flat gasket according to any of claims 1 to 3, **characterised in that** the offset (Δ) is less than the thickness (d) of the stopper element (144).

5. Flat gasket according to any of claims 1 to 4, **characterised in that** the offset (Δ) is less than approximately 0.3 mm.

6. Flat gasket according to any of claims 1 to 5, **characterised in that** the stopper element (144) is disposed at the side of the gasket sheet (102) towards which the bead crest (134) of the sealing bead (124) is curved.

7. Flat gasket according to any of claims 1 to 6, **characterised in that** the stopper element (144) is disposed at the side of the gasket sheet (102) that is opposite the side towards which the bead crest (134) of the sealing bead (124) is curved.

8. Flat gasket according to any of claims 1 to 7, **characterised in that** the flat gasket, besides the gasket sheet (102) that is provided with the sealing bead (124) and the stopper element (144), additionally comprises at least one further gasket sheet (104), which is provided with at least one sealing bead (126) extending around the through-opening (116).

9. Flat gasket according to any of claims 1 to 8, **characterised in that** the flat gasket, besides the gasket sheet (102) that is provided with sealing bead (124) and the stopper element (144), additionally comprises at least two further gasket sheets (104), between which the gasket sheet (102) provided with the sealing bead (124) and the stopper element (144) is disposed.

10. Flat gasket according to any of claims 1 to 9, **characterised in that** the height of the offset (162) substantially corresponds to the offset (Δ) of the stopper-supporting surface (146).

11. Flat gasket according to any of claims 1 to 10, **characterised in that** the offset region (164) of the carrier sheet (114) that extends around the through-opening (116) has a smaller thickness (D') than the region (170) of the carrier sheet (114) that lies outside of the offset region (164).

12. Flat gasket according to any of claims 1 to 11, **characterised in that** the carrier sheet (114) that is provided with the offset (162) is immediately adjacent to the gasket sheet (102) that is provided with the sealing bead (124) and the stopper element (144).

13. Flat gasket according to any of claims 1 to 12, **characterised in that** the offset region (164) of the carrier sheet (114) is offset in the direction of the side that is remote from the gasket sheet (102) provided with the sealing bead (124) and the stopper element (144).

14. Flat gasket according to any of claims 1 to 13, **characterised in that** the gasket sheet (102) provided with the sealing bead (124) and the stopper element (144) has an offset (156) extending between the inner bead foot (130) and the stopper element (144).

15. Flat gasket according to claim 14, **characterised in that** the offset region (158) of the gasket sheet (102) is offset in the direction of the side of the gasket sheet (102) towards which the bead crest (134) of the sealing bead (124) is curved.

16. Flat gasket according to claim 14, **characterised in that** the offset region (158) of the gasket sheet (102) is offset in the direction of the side of the gasket sheet (102) that is remote from the side towards which the bead crest (134) of the sealing bead (124) is curved.

17. Flat gasket according to any of claims 1 to 16, **characterised in that** the outer bead foot (132) is offset relative to the inner bead foot (130) in the direction of the side of the gasket sheet (102) towards which the bead crest of the sealing bead (124) is curved.

18. Flat gasket according to any of claims 1 to 16, **characterised in that** the outer bead foot (132) is offset relative to the inner bead foot (130) in the direction of the side of the gasket sheet (102) that is remote from the side of the gasket sheet (122) towards which the bead crest of the sealing bead (124) is curved.

19. Flat gasket according to any of claims 1 to 18, **characterised in that** the radial distance (bᵢ) of the inner bead foot (130) from the bead crest (134) is different from the radial distance (bₐ) of the outer bead foot (132) from the bead crest (134).

20. Flat gasket according to claim 19, **characterised in that** the radial distance (bᵢ, bₐ) from the bead crest (134) is greater in the case of the bead foot (130) that has a greater height difference relative to the bead crest (134) than in the case of the bead foot (132) that has a smaller height difference relative to the bead crest (134).

21. Flat gasket according to any of claims 1 to 20, **characterised in that** the stopper element (144) takes the form of a turned-over region of the gasket sheet (102), which is provided with the sealing bead (124) and the stopper element (144).

22. Flat gasket according of claim 21, **characterised in that** the stopper element (144) has a plurality of notches (148), which extend from an edge (150) of the stopper element (144) remote from the through-opening (116) out in the direction of the through-opening (116).

23. Flat gasket according to claim 22, **characterised in that** the mean length (L) of the notch-free regions of the edge (150) of the stopper element (144) between the notches (148) disposed successively in the longitudinal direction of the stopper element (144) is greater than the mean extent (I) of the notches (148) in the longitudinal direction of the stopper element (144) at the edge (150) of the stopper element (144).

24. Flat gasket according to claim 22 or 23, **characterised in that** the notches (148) are produced by mechanical cutting, by punching or by laser cutting.

25. Flat gasket according to any of claims 22 to 24, **characterised in that** the notches (148) are produced by substantially material-loss-free cutting into the gasket sheet (102).

## Revendications

1. Joint plat, en particulier joint de culasse (100), comprenant au moins un panneau d'étanchéité (102), qui comprend au moins une ouverture de passage (116) et au moins un collet d'étanchéification (124), qui s'étend autour de l'ouverture de passage (116) et qui est délimitée, sur le côté tourné vers l'ouverture de passage (116), par un pied de collet intérieur (130) et, sur le côté opposé à l'ouverture de passage (116), par un pied de collet extérieur (132) et qui présente un sommet de collet (134) s'étendant entre le pied de collet intérieur (130) et le pied de collet extérieur (132), et
au moins un dispositif de limitation de déformation (142) limitant la déformation du collet d'étanchéification (124), avec une face de soutien d'arrêt (146) du panneau d'étanchéité (102),
la face de soutien d'arrêt (146) étant décalée d'un décalage (Δ) dans une direction (160) s'étendant de manière perpendiculaire par rapport à la face de soutien d'arrêt (146) par rapport à une partie (138) jouxtant le pied de collet extérieur (132), située à l'extérieur du collet d'étanchéification (124), de la surface du panneau d'étanchéité (102), qui est disposé, sur le même côté du panneau d'étanchéité (102) que la face de soutien d'arrêt (146),
le joint plat comprenant, en plus du panneau d'étanchéité (102) qui est pourvu du collet d'étanchéification (124) et de l'élément d'arrêt (144), encore au moins un panneau de support (114),
le joint plat comprenant au moins un autre panneau d'étanchéité (108), qui est pourvu d'au moins un collet d'étanchéification (128) s'étendant autour de l'ouverture de passage (116) et qui est disposé précisément sur le côté du panneau de support (114), qui est opposé au panneau d'étanchéité (102), qui est pourvu du collet d'étanchéification (124) et de l'élément d'arrêt (144), et
une zone (164) du panneau de support (114) faisant office de dispositif de limitation de déformation pour le collet d'étanchéification (128) de l'autre panneau d'étanchéité (108),
**caractérisé en ce**
**que** le dispositif de limitation de déformation (142) comprend au moins un élément d'arrêt (144) disposé sur la face de soutien d'arrêt (146) du panneau d'étanchéité (102),
en ce que le panneau de support (114) comprend un coude (162), et
en ce que le collet d'étanchéification (124) est réalisé de manière non symétrique par rapport à un plan (136) s'étendant à travers son sommet de collet (134) et de manière perpendiculaire par rapport à la face de soutien d'arrêt (146), le pied de collet intérieur (130) s'étendant sur un niveau en hauteur différent de celui du pied de collet extérieur (132).

2. Joint plat selon la revendication 1, **caractérisé en ce que** le décalage (Δ) présente une valeur au moins d'environ 10 %, de préférence d'environ au moins 20 %, de l'épaisseur (d) de l'élément d'arrêt (144).

3. Joint plat selon l'une quelconque des revendications 1 ou 2, **caractérisé en ce que** le décalage (Δ) présente une valeur au moins d'environ 20 µm, de préférence d'environ 40 µm.

4. Joint plat selon l'une quelconque des revendications 1 à 3, **caractérisé en ce que** le décalage (Δ) présente une valeur inférieure à l'épaisseur (d) de l'élément d'arrêt (144).

5. Joint plat selon l'une quelconque des revendications 1 à 4, **caractérisé en ce que** le décalage (Δ) présente une valeur inférieure à environ 0,3 mm.

6. Joint plat selon l'une quelconque des revendications 1 à 5, **caractérisé en ce que** l'élément d'arrêt (144) est disposé précisément sur le côté du panneau d'étanchéité (102), en direction duquel le sommet de collet (134) du collet d'étanchéification (124) se gauchit.

7. Joint plat selon l'une quelconque des revendications 1 à 6, **caractérisé en ce que** l'élément d'arrêt (144) est disposé précisément sur le côté du panneau d'étanchéité (102), qui fait face au côté, en direction duquel le sommet de collet (134) du collet d'étanchéification (124) se gauchit.

8. Joint plat selon l'une quelconque des revendications 1 à 7, **caractérisé en ce que** le joint plat comprend, en plus du panneau d'étanchéité (102) qui est pourvu du collet d'étanchéification (124) et de l'élément d'arrêt (144), encore au moins un autre panneau d'étanchéité (104), qui est pourvu d'au moins un collet d'étanchéification (126) s'étendant autour de l'ouverture de passage (116).

9. Joint plat selon l'une quelconque des revendications 1 à 8, **caractérisé en ce que** le joint plat comprend, en plus du panneau d'étanchéité (102) qui est pourvu du collet d'étanchéification (124) et de l'élément d'arrêt (144), encore au moins deux autres panneaux d'étanchéité (104), entre lesquels le panneau d'étanchéité (102) qui est pourvu du collet d'étanchéification (124) et de l'élément d'arrêt (144) est disposé.

10. Joint plat selon l'une quelconque des revendications 1 à 9, **caractérisé en ce que** la hauteur du coude (162) correspond essentiellement au décalage (Δ) de la face de soutien d'arrêt (146).

11. Joint plat selon l'une quelconque des revendications 1 à 10, **caractérisé en ce que** la zone coudée (164) du panneau de support (114), qui s'étend autour de l'ouverture de passage (116), présente une plus petite épaisseur (D') que la zone (170), située à l'extérieur de la zone (164) coudée, du panneau de support (114).

12. Joint plat selon l'une quelconque des revendications 1 à 11, **caractérisé en ce que** le panneau de support (114) pourvu du coude (162) est directement adjacent au panneau d'étanchéité (102) qui est pourvu du collet d'étanchéification (124) et de l'élément d'arrêt (144).

13. Joint plat selon l'une quelconque des revendications 1 à 12, **caractérisé en ce que** la zone coudée (164) du panneau de support (114) est coudée en direction du côté opposé au panneau d'étanchéité (102) qui est pourvu du collet d'étanchéification (124) et de l'élément d'arrêt (144).

14. Joint plat selon l'une quelconque des revendications 1 à 13, **caractérisé en ce que** le panneau d'étanchéité (102) qui est pourvu du collet d'étanchéification (124) et de l'élément d'arrêt (144) présente un coude (156) s'étendant entre le pied de collet intérieur (130) et l'élément d'arrêt (144).

15. Joint plat selon la revendication 14, **caractérisé en ce que** la zone (158) coudée du panneau d'étanchéité (102) est coudée en direction précisément du côté du panneau d'étanchéité (102), en direction duquel le sommet de collet (134) du collet d'étanchéification (124) se gauchit.

16. Joint plat selon la revendication 14, **caractérisé en ce que** la zone coudée (158) du panneau d'étanchéité (102) est coudée en direction précisément du côté du panneau d'étanchéité (102), qui est opposé au côté en direction duquel le sommet de collet (134) du collet d'étanchéification (124) se gauchit.

17. Joint plat selon l'une quelconque des revendications 1 à 16, **caractérisé en ce que** le pied de collet extérieur (132) est décalé, par rapport au pied de collet intérieur (130), en direction précisément du côté du panneau d'étanchéité (102), en direction duquel le sommet de collet du collet d'étanchéification (124) se gauchit.

18. Joint plat selon l'une quelconque des revendications 1 à 16, **caractérisé en ce que** le pied de collet extérieur (132) est décalé, par rapport au pied de collet intérieur (130), en direction précisément du côté du panneau d'étanchéité (102), qui est opposé au côté du panneau d'étanchéité (102), en direction duquel le sommet de collet du collet d'étanchéification (124) se gauchit.

19. Joint plat selon l'une quelconque des revendications 1 à 18, **caractérisé en ce que** la distance radiale (bᵢ) du pied de collet intérieur (130) par rapport au sommet de collet (134) est différente de de la distance radiale (bₐ) du pied de collet extérieur (132) par rapport au sommet de collet (134).

20. Joint plat selon la revendication 19, **caractérisé en ce que** la distance radiale (bᵢ, bₐ) par rapport au sommet de collet (134) dans le cas précisément du pied de collet (130), qui présente une plus grande différence en hauteur par rapport au sommet de collet (134), est plus grande que dans le cas précisément du pied de collet (132), qui présente une différence en hauteur plus petite par rapport au sommet de collet (134).

21. Joint plat selon l'une quelconque des revendications 1 à 20, **caractérisé en ce que** l'élément d'arrêt (144) est réalisé sous la forme d'une zone repliée du panneau d'étanchéité (102) qui est pourvu du collet d'étanchéification (124) et de l'élément d'arrêt (144).

22. Joint plat selon la revendication 21, **caractérisé en ce que** l'élément d'arrêt (1447) présente plusieurs incisions (148), qui s'étendent depuis un bord (150), opposé à l'ouverture de passage (116), de l'élément d'arrêt (144) en direction de l'ouverture de passage (116).

23. Joint plat selon la revendication 22, **caractérisé en ce que** la longueur moyenne (L) des zones sans incision du bord (150) de l'élément d'arrêt (144) entre les incisions (148) se suivant dans le sens de la longueur de l'élément d'arrêt (144) est plus grande que l'extension moyenne (I) des incisions (148) dans le sens de la longueur de l'élément d'arrêt (144) au niveau du bord (150) de l'élément d'arrêt (144).

24. Joint plat selon l'une quelconque des revendications 22 ou 23, **caractérisé en ce que** les incisions (148) sont produites par un découpage mécanique, par un estampage ou par un découpage au laser.

25. Joint plat selon l'une quelconque des revendications 22 à 24, **caractérisé en ce que** les incisions (148) sont produites en pratiquant des incisions essentiellement sans perte de matériau dans le panneau d'étanchéité (102).
